# EUROPEAN PATENT APPLICATION

(11) **EP 3 786 630 A1**
(43) Date of publication of application: **03.03.2021**
(21) Application number: 20188270.1
(22) Date of filing: 29.07.2020
(51) Int. Cl.: G01N 29/04, G01N 29/22, G01N 29/265

(54) **SCANNING APPARATUS**

(30) Priority: 29.08.2019 GB 201912391
(71) Applicant: Rolls-Royce plc, London N1 9FX (GB)
(72) Inventor: Gameros Madrigal, Andres, Derby, Derbyshire DE24 8BJ (GB); Dong, Xin, Derby, Derbyshire DE24 8BJ (GB); Axinte, Dragos, Derby, Derbyshire DE24 8BJ (GB); Varenne, Régis, Derby, Derbyshire DE24 8BJ (GB)
(74) Representative: Rolls-Royce plc

(57) **Abstract**

A scanning fixture (300) for use in moving a tool (200) across a surface of an object (23a) is arranged to be attached to the object (23a) and comprises: a carriage (350) arranged to have the tool (200) connected thereto; and a frame (310) arranged to be mounted on the object (23a) and to have the carriage (350) mounted thereon. The frame (310) comprises: a first mount (330, 330b) arranged to be mounted on the object (23a); a second mount (340, 340b) arranged to be mounted on the object (23a); a carriage support (320) arranged to extend between the first and second mounts (312, 314), across a surface of the object (23a), and to have the carriage (350) moveably connected thereto. The carriage support (320) is a modular carriage support (320), comprising a plurality of modules (322) rotatably mounted on an elongate member (500). The plurality of modules (322) together form a path along which the carriage (350) can move. The tool may be a probe (200) for use in inspecting the object (23a). The fixture (300) may comprise one or more encoders arranged to generate position data for the carriage (350).

## Description

The present disclosure relates to an apparatus for moving a tool over the surface of curved objects such as fan blades, for example for inspection or repair, and in particular for inspecting composite fan blades, and to an inspection method using such an apparatus. In particular, but not exclusively, the apparatus may be arranged to allow a tool to be moved across the surface of fan blades of an aircraft engine, such as a gas turbine engine, without removing the blades from the engine, and optionally without removing the engine from a wing of the aircraft.

The skilled person would appreciate that the apparatus and method disclosed herein may be of particular utility in inspecting composite fan blades of aircraft engines, as requirements to routinely inspect such blades for in-service damage are expected. In this disclosure, the apparatus and method are therefore primarily described in terms of inspection, and more specifically in terms of fan blade inspection; however, the skilled person would appreciate that the same approach may be used for other objects or components, and for tools other than an inspection probe, whether or not in the aerospace field. For example, the apparatus and method disclosed herein may be applied to:
- Other composite aerospace parts, such as fan track liners / fan cases;
- Any kind of blade requiring an inspection to be carried out on its surface, even if it is not made of a composite material or a part of a gas turbine engine;
- In the gas and oil industry or in nuclear plants, inspection of tube or tank integrity, for example along a welding path or over a component's entire length;
- In the automotive industry, scanning of large curved surfaces; and/or
- Inspection of haul surfaces on boats.

Further, instead of a probe/tool for inspection, any other tool - such as a repair tool such as a laser head (which may be used to remove dirt or other excess material), or a marking tool such as a pen - may be moved across the surface by the apparatus.

According to a first aspect there is provided an apparatus, which may be referred to as a scanning fixture, for use in moving a tool (such as a probe or repair tool) across a surface of an object. The scanning fixture is arranged to be attached to the object and comprises a carriage arranged to have the tool connected thereto; and a frame arranged to be mounted on the object and to have the carriage mounted thereon. The frame comprises a first mount arranged to be mounted on the object; a second mount arranged to be mounted on the object; and a carriage support arranged to extend between the first and second mounts, across a surface of the object, and to have the carriage moveably connected thereto. The carriage support is a modular carriage support, comprising a plurality of modules rotatably mounted on an elongate member, each module comprising a contact surface arranged to be in contact with the surface of the object. The plurality of modules together forms a path along which the carriage can move.

The relative movement of the modules may make the carriage support flexible and therefore capable of adapting its shape to one or more curved surfaces of the object.

The skilled person would appreciate that various known inspection apparatuses may be suitable for inspecting flat plates, but not for inspecting non-flat (curved) objects.

The object may be a fan blade - the scanning fixture may be arranged to be attached to a fan blade.

The scanning fixture may be sized and shaped to be insertable between fan blades mounted in a fan of a gas turbine engine such that the scanning fixture can be used to inspect the fan *in situ* within the engine.

Embodiments may therefore provide an on-wing and couplant-free inspection apparatus and method for inspecting composite fan blades for damage during their in-service life. The inspection may be non-destructive and may be performed with the engine and blades *in situ.* The inspection may therefore be suitable for routine blade assessment, and/or may offer a time-saving as compared to *ex situ* methods. Likewise, marking and/or repair of fan blades may be performed in an equivalent manner.

By attaching the apparatus to a fan blade and using the apparatus to direct the probe during the inspection procedure, it may be possible to obtain a repeatable measurement with the probe in a more reliable manner than moving a probe freely by hand. The design of the apparatus may also ensure that the probe (or other tool) is kept in contact with the surface across the surface of the blade. The risk of operator error and/or the inspection time may therefore be decreased.

The apparatus is designed to allow for connection *in situ* to the blade, thus allowing inspection to be undertaken at an airport and without stripping each individual fan blade from the engine, for example. The modular design of the apparatus may also allow for a single apparatus to be readily applied to different engine models by simply adding or removing modules. In contrast to prior arrangements, embodiments may therefore allow inspection to be carried out directly on the engine.

In addition, as the apparatus can be tailored to the shape of the object to be scanned, surfaces with a much greater curvature across the width than could be scanned with prior arrangements, and/or surfaces with varying widths, may be accommodated - modules may be added or removed, and/or modules with differing shapes may be used as appropriate.

The plurality of modules may be arranged to rotate relative to each other to conform to the surface of the object when the/an elongate member of the carriage support is tensioned or compressed (as appropriate). One or more contact surfaces of each module may make contact with the surface when the elongate member is tensioned or compressed. The tensioning or compressing may move the elongate member towards the surface, and/or may change the curvature of the elongate member. The elongate member is flexible in that its curvature can be changed by the application of a suitable force without breaking or permanently deforming the elongate member.

The modules of the carriage support may be connected together by means of one or more flexible elongate members (such as rods or cables) passing through one or more apertures of each module, or otherwise connected to each module. Corresponding recesses and projections on the modules may assist in aligning the modules. One or more of the one or more flexible elongate members may be tensioned (or compressed) to hold the modules against a surface of the object. Each module comprises one or more contact surfaces arranged to be in contact with the surface of the object in use.

The scanning fixture may additionally comprise one or more encoders arranged to generate position data for the carriage.

The first mount may comprise a first rail arranged to be fixedly mounted along a first edge of the object and a first slider arranged to be slidably mounted on the first rail and to have a first region (e.g. a first end region) of the carriage support connected thereto. The second mount may comprise a second rail arranged to be fixedly mounted along a second edge of the object (the second edge optionally opposing the first) and a second slider arranged to be slidably mounted on the second rail and to have a second region (e.g. a second end region) of the carriage support connected thereto. The carriage support may be arranged to move with respect to the rails, and therefore along a length of the object. One or more encoders may monitor the position of the carriage support relative to one or each of the rails, and therefore to monitor the position of the carriage support along the length of the object.

In embodiments in which the object is curved, the first rail may be shaped to match the curvature of the first edge and the second rail may be shaped to match the curvature of the second edge.

The frame may further comprise an indexing arrangement arranged to allow indexed movement of the carriage relative to the rails.

In various alternative embodiments, the mounts may be arranged to retain the carriage support in a fixed position along the length of the object. The first mount may comprise a clamp arranged to be fixedly mounted at a position on a first edge of the object and the second mount may comprise a clamp arranged to be fixedly mounted at a position on a second edge of the object.

Each module may be U-shaped, and may be arranged to form a portion of a flexible guide channel for the carriage, the flexible guide channel defining the path to be taken by the carriage.

Each module may have an aperture therethrough. The elongate member may be flexible and arranged to pass through the aperture of each module and to be secured to both mounts so as to retain the modules in a line between the mounts. The aperture may pass through a central region of each module.

Each module may comprise: a first side apertures in a first side region of the module; and a second side apertures in a second side region of the module, the second side opposing the first side. The carriage support may further comprise: a first side cable (or other flexible member) arranged to pass through the first side aperture of each module and to be secured to both mounts; and a second side cable (or other flexible member) arranged to pass through the second side aperture of each module and to be secured to both mounts.

Each module may comprise a protrusion on a front face thereof and a recess on a rear face thereof. The protrusion of one module may be arranged to be rotatably received within the recess of an adjacent module of the carriage support. The protrusion and the recess may each comprise a hemispherical contact surface arranged to contact the hemispherical contact surface of the other. The hemispherical contact surfaces may facilitate relative rotational movement of the modules.

Each module may have a front surface and a rear surface, the front surface of one module being arranged to lie adjacent to the rear surface of the next module along the chain. The front and rear surfaces of each module may not be parallel, or may comprise regions aligning with each other which are not parallel. Contact between the front non-parallel surface region of one module and the rear non-parallel surface region of the adjacent module may define a maximum relative angle of rotation for the modules away from each other (especially in use on a concave surface) or towards each other (especially in use on a convex surface).

The scanning fixture may be arranged to inspect an object; the tool may be a probe.

The scanning fixture may be arranged to repair an object; the tool may be a repair tool.

The carriage support may be rotatably mounted on each mount.

According to a second aspect there is provided an apparatus for use in moving a tool across a surface of an object, the apparatus comprising:
a tool; and
a scanning fixture of the first aspect, with the tool mounted thereon.

The apparatus may be an inspection apparatus. The tool may be a probe arranged to generate object inspection data.

The scanning fixture may comprise one or more encoders arranged to generate position data for the carriage. The apparatus may further comprise a processing unit arranged to receive the object inspection data and the position data and to generate spatial object inspection data therefrom.

According to a third aspect there is provided an inspection method for inspecting an object, the inspection method comprising:
mounting first and second mounts of a scanning fixture on the object;
preparing a carriage support of the scanning fixture by mounting a plurality of modules on an elongate member such that the modules can rotate with respect to the elongate member;
attaching the carriage support to the first and second mounts such that the carriage support extends between the mounts and each module has a contact surface in contact with a surface of the object, the plurality of modules together forming an inspection path;
installing a carriage comprising a probe such that the carriage can move along the inspection path; and
moving the carriage over the surface of the object; and
generating, by the probe, object inspection data for a plurality of positions of the probe as the probe is moved over the surface of the object.

In other aspects, the probe may be replaced with a different tool and the generating inspection data may be replaced with repairing or marking the object, or the likes.

Each module has one or more contact surfaces in contact with a surface of the object - the contact surface(s) may make contact with the surface as soon as the carriage support is attached to the mounts (the attachment may apply a suitable force to the carriage support to it to conform with the surface), or only after the elongate member is compressed or tensioned to cause the carriage support to conform to the surface.

The object may be a fan blade. The mounting the scanning fixture may comprise attaching the scanning fixture to the fan blade. The mounting the scanning fixture may comprise attaching the scanning fixture to the fan blade whilst the fan blade is in a fan of a gas turbine engine, and optionally whilst the gas turbine engine is mounted on a wing of an aircraft.

The mounting the scanning fixture may comprise mounting a first rail, arranged to receive the first mount, along a first edge of the object and mounting a second rail, arranged to receive the second mount, along a second edge of the object. Each mount may be slidably mounted on the respective rail. The rails may alternatively be thought of as a part of the mount, each mount comprising a rail and a slider. The moving the carriage over the surface of the object may comprise moving the carriage support along the length of the rails and moving the carriage along the carriage support between the rails.

The method may comprise tensioning or compressing the elongate member so as to bring one or more of the modules into contact with the surface of the object.

Various embodiments may offer one or more of the following features:
(a) In embodiments with rails that follow the edges of the blade (or other object), the system may be installed directly on the engine without having to dismount the blades from the engine, and the entire blade (length and width) may be scanned following only a single installation.
(b) In embodiments with rails and sliders, the sliders can be set to different positions using an indexing means (such as sets of holes and one or more corresponding protrusions), which may provide an accurate and repeatable location.
(c) The use of a carriage support comprising multiple modular parts which have some mobility with respect to each other may provide flexibility, and may allow the carriage support to adapt to a wide variety of curvatures of components to be scanned.
(d) The provision of one or more contact points between modules and the blade, where present, may improve reliability and repeatability of carriage positioning.
(e) The possible proximity of the carriage support to the surface of the scanned blade and its conformity with the surface of the blade may reduce or eliminate risk of damaging the surrounding blades while using the apparatus (as compared to a straight linear probe arm or the likes).
(f) In various embodiments, the modular carriage support can be locked in to a set shape at any given position on the blade - the shapes and interactions of the modular parts, which may include chamfers to facilitate some relative angular mobility, may facilitate the shape adjustment and locking. The locking may be facilitated by the combination of (relatively) rigid parts (the modules) with flexible elongate members (e.g. one or more rods and/or cables); the carriage support may function in a similar manner to a human spine; allowing some controlled flexibility to facilitate repeatable inspection of curved surfaces.
(g) In embodiments in which the modular carriage support can be locked in to a set shape, a path (e.g. a guide channel) created by the carriage support once set in position may be prevented from moving (i.e. the modules may no longer be able to move with respect to each other), and may therefore allow a repeatable path to be followed with the probe - for objects for which curvature and width do not change along at least a portion of the length; in some embodiments the carriage support may be dismounted and re-mounted (e.g. if not on rails), or moved along the length (e.g. if on rails), whilst maintaining the locked shape, so that the same path can be used for each position along the length of the blade. The carriage may be confined to move along the path. In embodiments in which the tool is a probe, the path may be referred to as an inspection path.
(h) In order to adapt to the changing length of the object to be scanned between the two sliders, modules can be added or removed to adapt the length of the carriage support correspondingly.
(i) In various embodiments, two cables - one on each side of the set of modules - may be used to facilitate setting and/or maintaining the position of the modules, and/or to limit the mobility of the chain of modules.
(j) In embodiments in which the inspection path is a guide channel arranged to receive the carriage, the modules may be sized and/or shaped to prevent rotation of the carriage, so providing a constant orientation for the probe.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, or 3.2 to 3.8, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.
In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other. Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38, 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds), for example in the range of from 0.28 to 0.32. These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 220 cm, 230 cm, 240 cm, 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350 cm, 360 cm (around 140 inches), 370 cm (around 145 inches), 380 (around 150 inches) cm, or 390 cm (around 155 inches), 400 cm, 410 cm (around 160 inches) or 420 cm (around 165 inches). The fan diameter may be in an inclusive range bounded by any two of the values in the previous sentence (i.e. the values may form upper or lower bounds), for example in the range of from 240 cm to 280 cm or 330 cm to 380 cm.

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 2250 cm to 300 cm (for example 2450 cm to 280 cm or 250 cm to 270 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 3320 cm to 380 cm may be in the range of from 1200 rpm to 2000 rpm, for example in the range of from 1300 rpm to 1800 rpm, for example in the range of from 1400 rpm to 18600 rpm. In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.28, 0.29, 0.3, 0.31, 0.32, 0.33, 0.34, 0.35, 0.36, 0.37, 0.38, 0.39 or 0.4. The fan tip loading may be in an inclusive range bounded by any two of the values in the previous sentence (i.e. the values may form upper or lower bounds), for example in the range of from 0.28 to 0.31 or 0.29 to 0.3.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17, 17.5, 18, 18.5, 19, 19.5 or 20. The bypass ratio may be in an inclusive range bounded by any two of the values in the previous sentence (i.e. the values may form upper or lower bounds), for example in the range of from 13 to 16, or 13 to 15, or 13 to 14. The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds), for example in the range of from 50 to 70.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg-1s, 105 Nkg-1s, 100 Nkg-1s, 95 Nkg-1s, 90 Nkg-1s, 85 Nkg-1s or 80 Nkg-1s. The specific thrust may be in an inclusive range bounded by any two of the values in the previous sentence (i.e. the values may form upper or lower bounds), for example in the range of from 80 Nkg-1s to 100 Nkg-1s, or 85 Nkg-1s to 95 Nkg-1s. Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). Purely by way of example, a gas turbine as described and/or claimed herein may be capable of producing a maximum thrust in the range of from 330kN to 420 kN, for example 350kN to 400kN. The thrust referred to above may be the maximum net thrust at standard atmospheric conditions at sea level plus 15 degrees C (ambient pressure 101.3kPa, temperature 30 degrees C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds), for example in the range of from 1800K to 1950K. The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 262 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance- between top of climb and start of descent. Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise condition. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).
In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** is a schematic view of apparatus of an embodiment scanning a concave face (left) and a convex face (right) of a fan blade *in situ* within a fan;
**Figure 5** illustrates a probe used in an embodiment;
**Figure 6** illustrates a method of an embodiment;
**Figure 7** illustrates two rails attached to a blade;
**Figure 8** illustrates the two rails and blade of Figure 7 when separated/before assembly;
**Figure 9** illustrates a clamp mounting a rail to a blade;
**Figure 10** illustrates a slider mounted on a rail;
**Figure 11** illustrates a modular carriage support mounted on a concave surface of a blade;
**Figure 12** illustrates a modular carriage support mounted on a convex surface of a blade;
**Figure 13** illustrates the convex and concave surfaces of a blade;
**Figures 14** **and** **15** illustrate positioning and securing of a modular carriage support to a convex surface of a blade;
**Figures 16** **and** **17** illustrate positioning and securing of a modular carriage support to a concave surface of a blade;
**Figure 18** illustrates a carriage arranged to house a probe and to move along the modular carriage support;
**Figure 19** illustrates the carriage of Figure 18 in situ within the modular carriage support;
**Figures 20 and 21** illustrate front and back views of carriage support modules for a modular carriage support arranged to be mounted on a concave surface, respectively;
**Figures 22 and 23** illustrate relative movement of a pair of carriage support modules as shown in Figures 20 and 21;
**Figures 24 and 25** illustrate front and back views of carriage support modules for a modular carriage support arranged to be mounted on a convex surface, respectively;
**Figures 26 and 27** illustrate relative movement of a pair of carriage support modules as shown in Figures 24 and 25;
**Figure 28** illustrates an apparatus of an embodiment without rails;
**Figure 29** illustrates a method of an embodiment;
**Figure 30** illustrates a method of an embodiment; and
**Figure 31** illustrates two carriage supports mounted on a single set of rails; one carriage support arranged to allow a tool to be moved over each side of a fan blade (blade not shown).

In the Figures, like reference numerals are used for like components. In addition, a reference numeral for a class of like components may be sub-divided with letters for first and second (e.g. right and left) components of that class in some instances. For example, reference 510 is used to refer to side cables, with reference 510a more specifically indicating a first side cable 510a and reference 510b more specifically indicating a second side cable 510b.

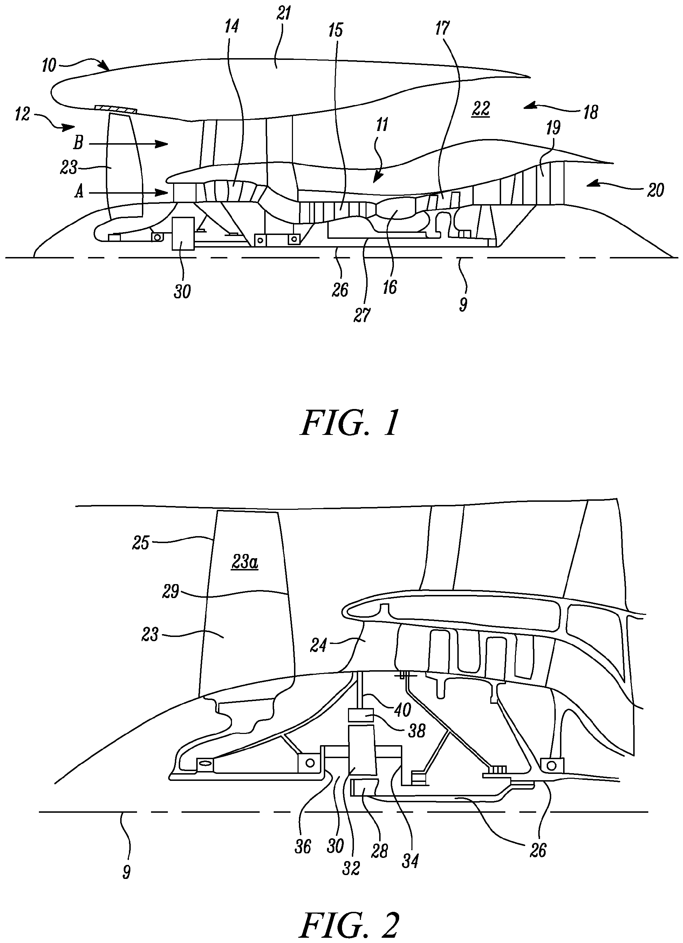

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

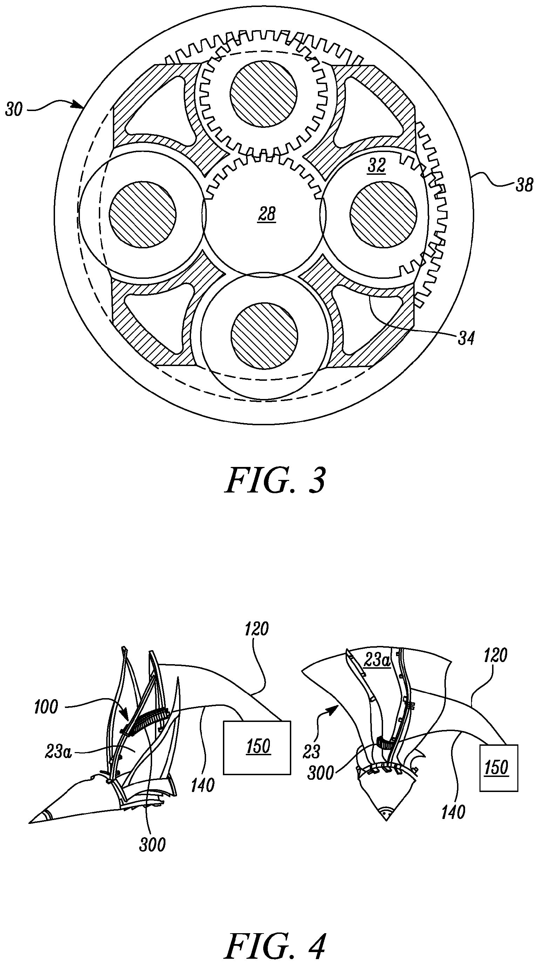

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30. Further, in some embodiments the apparatus may be used for a fan or propeller separate from an engine, or for a single blade separate from a fan or propeller. Still further, the skilled person would appreciate that the apparatus may be used to inspect or repair objects and/or surfaces that are not fan blades, such as fan track liners or the likes, and optionally objects and/or surfaces unrelated to aerospace applications.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

An apparatus 100 is shown schematically *in situ* on a fan blade 23a of a fan 23 in a gas turbine engine 10 in Figure 4. The apparatus 100 of the embodiment being described is arranged to be used for inspecting an object, and more specifically for inspecting a blade 23a of the fan 23 of the turbine engine 10, and may therefore be referred to as an inspection apparatus 100. In other embodiments, the inspection apparatus 100 may be sized and shaped for inspecting other objects, and/or the apparatus 100 may be arranged to perform a different function instead of, or as well as, inspection (e.g. repair). Embodiments may have particular utility in scanning a tool across the surface of curved objects.

The inspection apparatus 100 comprises a frame 310 arranged to be mounted on the blade 23a and a probe 200 mounted on the frame 310 and arranged to be moved across the surface of the blade 23a so as to scan at least a portion of the blade 23a. In embodiments in which the apparatus is not an inspection apparatus, the probe 200 may be replaced with a different tool, such as a laser head. The apparatus 100 may otherwise be similar or identical. The following description uses the example of an inspection apparatus 100, but the skilled person would appreciate that all the features described may equivalently be used with a different tool 200 - optionally to repair damage identified by a prior pass of a probe. The scanning apparatus 100 may therefore allow any tool 200 to be moved across the surface of interest and positioned where desired.

In the embodiment shown in Figure 4, wires 120, 140 are provided between the inspection apparatus 100 and a processing unit 150 - data are transmitted along the wires 120, 140. In alternative embodiments, wireless data transmission may be used instead of, or as well as, a physical connection, a processing unit may be incorporated into the apparatus 100, and/or data may be transferred manually, for example using a USB stick. In the embodiment being described, a first wire 120 is connected to the frame 310. The first wire 120 is arranged to transmit position data from one or more encoders 400 to the processing unit 150. In the embodiment being described, a second wire 140 is connected to the probe 200. The second wire 140 is arranged to transmit object inspection data from the probe 200 to the processing unit 150. In the embodiment being described, the probe 200 is or comprises an ultrasound probe, and the object inspection data is or comprises ultrasound data. The second wire 140 may be integral with the probe 200, or may be detachably connected thereto. In alternative embodiments, a single wire may be used for both data types, or no wires may be used for either or both data types (e.g. wireless data transfer, or local storage for later transfer).

In alternative or additional embodiments, the position data may be stored locally for later use (the scanning fixture may comprise memory in such embodiments), and/or the position data may be processed locally (the scanning fixture may comprise a processor, processing circuitry or the likes in such embodiments).

For ease of description, the inspection apparatus 100 is described below in the context of inspecting a fan blade 23a, the fan blade having first and second edges 25, 29 - the leading and trailing edges of the blade. The first and second edges 25, 29 are arranged to extend in a substantially radial direction within the fan 23, and may therefore be described as radial edges (as opposed to the blade tip edge and hub edge). The surface of the fan blade 23a extends between the first and second edges 25, 29. The surface of the fan blade 23a has two faces 31, 33 - one face 31 being the suction side (also referred to as the suction panel) and the other face 33 being the pressure side (also referred to as the pressure panel). In the embodiment being described, the fan blade 23a is curved - the edges 25, 29 and faces 31, 33 are therefore curved.

A distance along the edges 25, 29 is referred to herein as a length - this may be referred to as an x-direction. A distance across the surface 31, 33, between the edges 25, 29, is referred to herein as a width - this may be referred to as a y-direction.

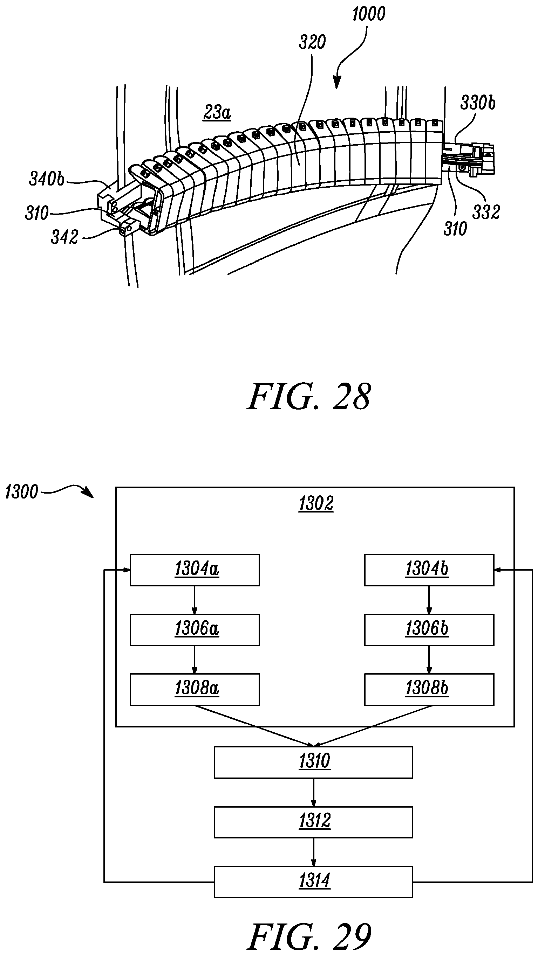

In some embodiments described herein, such as that shown in Figure 28, the probe 200 is arranged to move across the width of the object 23a (in the y-direction) only. A carriage support 320, arranged to support and guide the carriage 320, may be mounted at a fixed position in the x-direction, so allowing the probe 200 to move in the y-direction only.

In other embodiments described herein, the probe 200 is arranged to move across the width of the object 23a (in the y-direction) and also along the length of the object (in the x-direction). In such embodiments, the frame 310 may comprise two rails 312, 314 (described below) extending along the length of the fan blade 23a - movement along the length of the rails 312, 314 is therefore equivalent to movement along the length of the blade 23a. In the embodiments being described, the rails 312, 314 (described below) each extend along one edge 25, 29 of the fan blade 23a, and more particularly the rails 312, 314 are located on opposing edges of the blade 23a - movement from one rail 312 to the other rail 314 is therefore equivalent to movement across the width of the blade 23a.

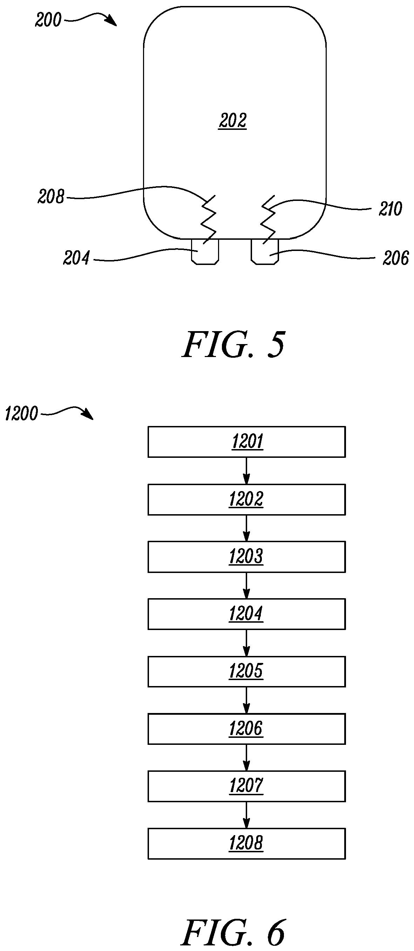

The inspection apparatus 100 comprises a probe 200, as shown in Figure 5. The probe 200 is selected to detect damage or defects in the object 23a to be inspected. In the embodiment being described, the object to be inspected is a composite fan blade 23a, and the probe 200 may be arranged to detect one or more of:
- Delaminations;
- De-bonded regions;
- Scratches, notches or other surface damage;
- Core damage;
- Stress or strain;
- Liquid ingress; or
- Far side damage (i.e. surface damage on the face of the object furthest from the probe 200).

In the embodiment being described, the probe 200 is an ultrasound probe. In the embodiment being described, the probe 200 is a bond tester inspection probe, and may for example be a BondMaster pitch-catch probe from Olympus NDT Ltd or the Bondascope 3100 pitch-catch probe from NDT Systems Inc. In alternative or additional embodiments, different or additional probes may be used - for example, optical, resonance and/or mechanical impedance probes may be used in place of a pitch-catch probe, and/or a multi-mode probe capable of collecting a variety of data types may be used.

The probe 200 comprises a probe housing 202. The probe 200 comprises two pins 204, 206: a transmit pin 204 and a receive pin 206. The pins 204, 206 protrude from the housing 202. In the embodiment being described, the pins 204, 206 are moveably mounted within the housing 202, and more particularly are spring-mounted (indicated by springs 208, 210) such that the pins 204, 206 are biased away from the housing 202, but can retract into the housing 202 when pressure is applied to the pins. The movement of the pins 202 may facilitate maintaining contact with a surface when that surface is uneven or curved. The pins 204, 206 can move in this way by a total of less than 10 mm, and often by up to only 8-9 mm, in known probes 200 - the skilled person would appreciate that this level of movement is insufficient for accommodating surface curvature of many curved objects. Embodiments may therefore be of particular utility when a maximum distance between an object surface and a straight line between opposing edges of that object 23a is greater than 10 mm, 12 mm or 15 mm

The inspection apparatus 100 comprises a scanning fixture 300. The scanning fixture 300 is arranged to be mounted on the object 23a and to have the probe 200 mounted thereon. In the embodiment being described, the scanning fixture 300 comprises a frame 310 and a carriage 350.

The carriage 350 is arranged to have the probe 200 attached thereto. In the embodiment being described, the carriage 350 is designed to engagingly receive the probe 200. The probe 200 is releasably mounted on the carriage 350 - the probe 200 can be removed and replaced (optionally with a different probe, or other tool). In the embodiment being described, the carriage 350 comprises an adjustable probe-mount, arranged to allow probes 200 of a variety of shapes and/or sizes to be mounted thereon. In alternative embodiments, the probe-mount may be sized for a particular probe 200 and may not be capable of mounting different probes.

In alternative embodiments, the probe 200 may be integral with the carriage 350, or permanently mounted on the carriage (e.g. by an adhesive, welding, or the likes). In such embodiments, it may not be possible to replace the probe 200 whilst using the same carriage 350. In such embodiments, the carriage 350 may be arranged to be separable from the rest of the scanning fixture 300, such that the carriage and probe unit 350, 200 may be removed and replaced.

The carriage 350 is arranged to be movably mounted on the frame 310. The frame 310 is arranged to be mounted on the object 23a. At least part of the frame 310 is arranged to have a fixed position with respect to the object 23a in use. The carriage 350 is arranged to be moveable with respect to the frame 310, and therefore with respect to the object 23a in use.

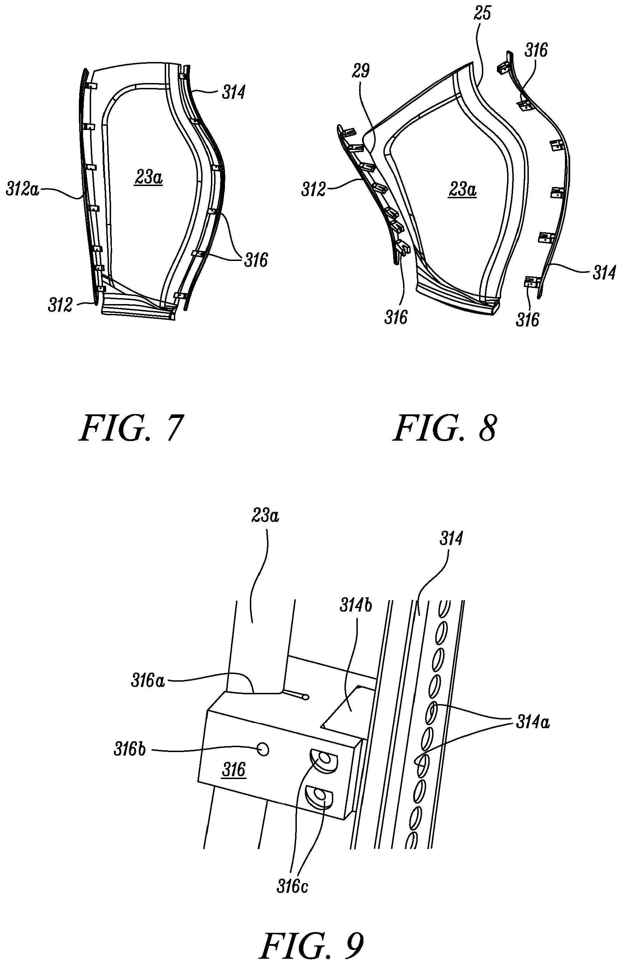

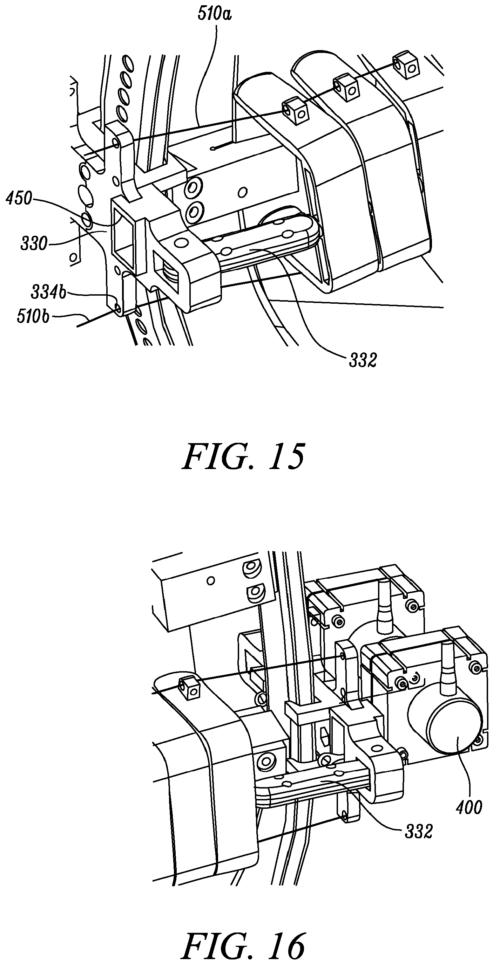

In the embodiment being described with respect to Figures 7 to 17, the frame 310 comprises two rails 312, 314. The first rail 312 is arranged to be mounted on a first edge 29 of the fan blade 23a. The second rail 314 is arranged to be mounted on a second edge 25 of the fan blade 23a. The rails 312, 314 have a fixed position with respect to the object 23a in use.

In the embodiment being described, each rail 312, 314 is shaped to follow the curve of the corresponding edge 25, 29 of the blade 23a (i.e. the leading edge 25 or trailing edge 29). The rails 312, 314 are arranged to be mounted along the edge 25, 29 of the blade 23a.

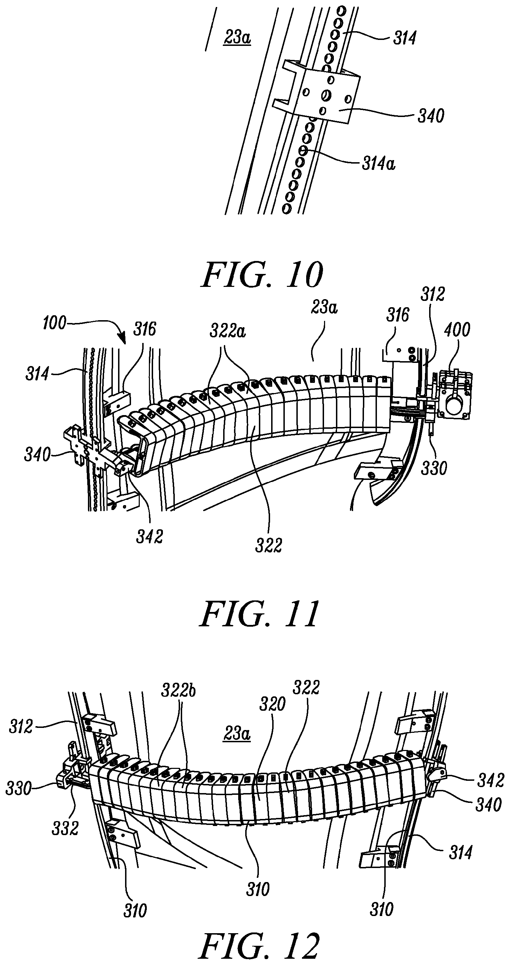

In the embodiment shown in Figure 11, the leading edge rail 314 is shown on the left hand side of the blade 23a, on the blade's leading edge 25, and the trailing edge rail 312 is shown on the right hand side of the blade 23a, on the blade's trailing edge 29. In this embodiment, the probe 200 is arranged to be moved across a concave surface of the blade 23a.

In the embodiment shown in Figure 12, the leading edge rail 314 is shown on the right hand side of the blade 23a, on the blade's leading edge 25, and the trailing edge rail 312 is shown on the left hand side of the blade 23a, on the blade's trailing edge 29. In this embodiment, the probe 200 is arranged to be moved across a convex surface of the blade 23a.

In the embodiment being described, the rails 312, 314 are shaped to match the shape of the edge 25, 29 to which they are arranged to be attached in use, so that no, or only a small amount, of bending of the rail 312, 314 is required to fit the rails 312, 314 to the blade 23a. In the embodiment being described, the rails 312, 314 are arranged to have some flexibility, for example to facilitate mounting and/or to allow for differences in curvature between different fan blade designs or between blades of the same type (due to e.g. deformation or damage in service, or manufacturing errors). In alternative embodiments, the rails 312, 314 may be rigid and may be shaped to exactly match object curvature, or may not be shaped to match an edge 29 to which they are arranged to be attached but instead have sufficient flexibility to be shaped to fit.

In the embodiment being described, the rails 312, 314 are made from a nylon plastic. The skilled person would appreciate that metals and/or different polymers may be used in different embodiments. In the embodiment being described, the rails 312, 314 are made by 3D printing (optionally in sections). In particular, a blade 23a may be scanned, or a CAD model of the blade 23a obtained, and the rail shape may be determined, and the rails 312, 314 printed, based on blade edge size and shape. In alternative embodiments, the rails 312, 314 may be differently made, for example using a mould, or by machining. For relatively simple rail shapes, for example, the rails 312, 314 may be made by bending a regular section with a bending machine to obtain the shape needed. The rails 312, 314 may then be fitted to a blade 23a.

In the embodiment being described, each rail 312, 314 is arranged to be mounted to its respective edge 25, 29 by a plurality of mounts 316. In the embodiment being described, the mounts 316 are clamps 316. The skilled person would appreciate that different or additional mounts, e.g. a removable adhesive, magnets, suction cups or the likes, may be used in other embodiments.

In the embodiment being described, the mounts 316 are arranged to extend away from the edges of the blade 23a such that the rails 312, 314 extend outwardly beyond the edges 25, 29 of the blade 23a. The outward positioning may facilitate access to more of the blade surface for the probe 200. In alternative embodiments, the mounts 316 may be differently positioned.

In the embodiment being described, each clamp 316 comprises a channel 316a therethrough, the channel 316a being shaped to accommodate or match the shape of the blade edges - a portion of the respective blade edge 25, 29 is received within the channel 316a. The clamps 316 can then be tightened to grip the blade edge within the channel 316a. In the embodiment being described, each clamp 316 comprises a setting screw 316b which can be tightened to tighten the channel 316a, so gripping the blade edge 25, 29. Additional or alternative tightening means may be used in other embodiments.

In the embodiment being described, the clamps 316 are made from one or more materials which are softer than the blade 23a, thus reducing or avoiding a risk of scratching. For example, polymeric clamps 316 may be used on composite or metal blades 23a.

In the embodiment being described, the clamps 316 are connected to the rails 312, 314 by means of bolts or screws 316c arranged to pass through both a portion of the clamp 316 and a mounting block 314b extending from the respective rail 312, 314. In the embodiment being described, the mounting blocks 314b are protrusions extending from the rail 314, and are formed integrally with the rail 314 - equivalent mounting blocks 312b are provided on the other rail 312. In alternative or additional embodiments, alternative or additional connection or fastening means known in the art may be used to attach the clamps 316 to the rails 312, 314, or the clamps 316 may be formed integrally with the rails 312, 314.

In the embodiment being described, the fan blade 23a is in the range of 100 cm to 200 cm long, and more specifically is around 150 cm long. The rails 312, 314 are sized appropriately for the length of the fan blade 23a. The skilled person would appreciate that an innermost end of the fan blade 23a may be received within a hub of the fan 23 in use, and that the full length of the fan blade 23a may therefore not be exposed in use - the rail length may therefore be selected to be less than the fan blade length, and optionally equal to the exposed fan blade length.

In the embodiment being described, an indexing arrangement is provided to allow or facilitate indexed movement of the carriage 350 relative to the frame 310. In the embodiment being described, the rails 312, 314 are provided with indexing means 312a, 314a along their lengths - the indexing arrangement comprises holes 312a, 314a in this embodiment. The holes 312a, 314a are arranged to allow or facilitate indexed movement of the carriage 350 along the rails 312, 314, as is described in more detail below. The carriage 350 can therefore be moved between known, set positions along the rails 312, 314, as defined by the holes 312a, 314a. The holes 312a, 314a are evenly spaced, and are spaced apart by around 10 mm, in the embodiment being described. In alternative embodiments, the spacing may not be even, or the spacing may be different from 10 mm. For example, holes may be more closely spaced in regions of particular interest. In additional or alternative embodiments, a different indexing arrangement (e.g. teeth or projections), or no indexing arrangement, may be provided. In embodiments with no indexing means in or on the rails 312, 314, the carriage 350 may be moved continuously along the rails, or may be indexed manually or by a separate actuator or other arrangement.

In the embodiment being described, the frame 310 comprises two sliders 330, 340. A first slider 330 is slidably mounted on the first rail 312. The first slider 330 is arranged to be able to move along the length of the first rail 312. A second slider 340 is slidably mounted on the second rail 314. The second slider 340 is arranged to be able to move along the length of the second rail 314.

In the embodiments being described, the sliders 330, 340 are friction sliders sized and shaped to grip the rails 312, 314 and to be slidable along the rails 312, 314 when a force sufficient to overcome the friction is applied (without wheels; relying on friction to avoid accidental movement of the slider 330, 340).

In alternative embodiments, any suitable slider design known in the art may be used - for example, each slider 330, 340 may comprise wheels arranged to grip edges of the respective first or second rail 312, 314 and facilitate sliding of the slider 330, 340 along the rail. In such embodiments, each slider 330, 340 may comprise two pairs of wheels with the spacing between outer diameters of wheels of each pair being at least substantially equal to rail width so as to contact or grip the rail 312, 314. In such embodiments, each wheel may have two rims, one arranged to lie on each side of the respective rail 312, 314, so as to hold the wheels onto the rail 312, 314.

In the embodiment being described, each slider 330, 340 comprises at least one retractable projection. The retractable projection is arranged to fit engagingly within a hole of the holes 312a, 314a of the corresponding rail 312, 314, forming an indexing arrangement such that the sliders 330, 340, and therefore the carriage support 320, can be held in place along the length of the fan blade 23a whilst one or more measurements are taken. The cooperation of the holes 312a, 314a and projections provides the indexing arrangement for the apparatus 100 of the embodiment being described.

The indexing means 312a, 314a may allow the two sliders 330, 340 to be moved along the respective rail 312, 314, and stopped in given positions - the indexing holes 312a, 314a on the rails 312, 314 define the given positions. In the embodiment being described, the carriage support 320 is mounted on the rails 312, 314 by the sliders 330, 340 - a first region of the carriage support 320 (an end region, in the embodiment shown) is mounted on the first slider 330, and a second region of the carriage support 320 (the other end region, in the embodiment shown) is mounted on the second slider 340. The carriage support 320 is therefore moved with respect to the rails 312, 314 when the sliders 330, 340 move along the rails, so moving the carriage 350 along the rails 312, 314.

In alternative embodiments, the carriage 350 may not be moved along the rails 312, 314; the scanning may instead be performed along a line across the width of the surface of the object 23a only. In such embodiments, the rails 312, 314 and sliders 330, 340 may be replaced with simpler first and second mounts 330b, 340b - for example two clamps 316, one on each side 25, 29 of the object 23a, with one end region of the carriage support 320 attached to (or integral with) each clamp 316. The scanning fixture 300 may consist of the carriage 350, carriage support 320 and the two mounts 330b, 340b in such embodiments. In such embodiments, the first and second mounts 330b, 340b may be detached from the object 23a and reattached to the object 23a at a different position along the object's length to scan a different region.

In the embodiment being described, the scanning fixture 300 comprises a carriage support 320 arranged to extend between the first and second mounts 330, 340. The carriage support 320 extends across the width of the surface to be inspected (the fan blade surface in the embodiment being described).

In the embodiment being described, the carriage 350 is mounted on the carriage support 320. The carriage support 320 is arranged to allow the carriage 350, and therefore the probe 200, to be moved across the surface to be inspected. The carriage support 320 is arranged to be mounted on both mounts 330, 340 - for example with one end region of an elongate carriage support 320 being mounted on one mount 330 and a second end region of the elongate carriage support being mounted on the other mount 340. The mounts 330, 340 may therefore influence or define the position of the carriage support 320, and/or may serve to limit probe movement to the surface to be inspected. In the embodiment being described, in which the mounts 330, 340 are slidably mounted on rails 312, 314, the carriage 350 is confined to move between the mounting positions of the carriage support 320 to the rails 312, 314, and therefore confined to move between the rails 312, 314. The rails 312, 314 may be thought of as a part of the mount for the carriage support 320 in such embodiments.

The carriage support 320 extends between the mounts 330, 340, across the width of the fan blade 23a. The carriage support 320 is modular; comprising a plurality of modules 322a, 322b. The modules 322 are moveably connected together such that the carriage support 320 is flexible. The plurality of modules 322 together form a path along which the carriage 350 can move. The carriage support 320 may be thought of as a flexible spine, or a chain of modules 322. The modules 322 of each carriage support 320 may be made by 3D printing/additive manufacture, by moulding, or by any suitable technique known in the art. In the embodiment being described, the carriage support 320 is mounted on both rails 312, 314, by means of the sliders 330, 340. The skilled person would appreciate that the flexibility of the carriage support 320 may facilitate maintaining probe-surface contact in some embodiments, for example when the surface to be inspected (or otherwise treated) is curved.

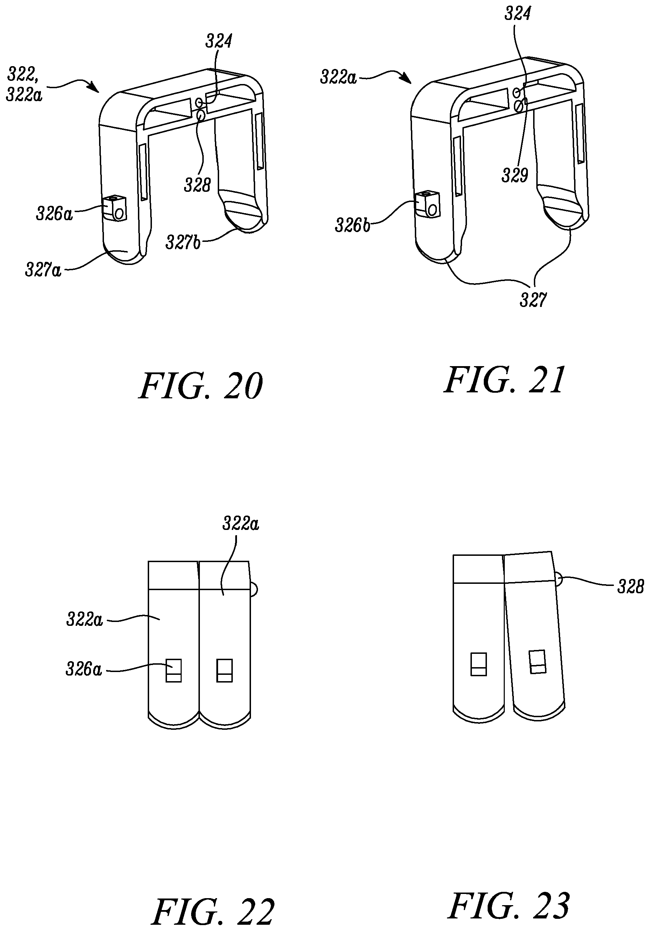

In the embodiment being described, the carriage support 320 is (at least substantially) straight unless it is bent or flexed by the application of a force. In alternative embodiments, the carriage support 320 may be curved - for example being shaped to match an object to be inspected - this may be of particular utility for objects with a constant curvature along their lengths, unlike a fan blade 23a, for which the curvature generally varies along the length. The curvature (or otherwise) of the carriage support 320 in its unstressed/unpressured state may be determined by the shape of the modules 322. As shown in Figures 20 to 27, straight, parallel sides of modules 322 may tend to form a straight chain for the carriage support 320, until the modules 322 are rotated to part, for example. In the embodiment being described, each slider 330, 340 comprises a fixation part 332, 342 arranged to allow one end of the carriage support/chain 320 to be connected thereto. In embodiments without sliders 330, 340 or rails 312, 314, each non-moving mount 330b, 340b may comprise a fixation part 332, 342 arranged to allow one end of the carriage support/chain 320 to be connected thereto.

In the embodiment being described, modules 322 may be added to, or removed from, the chain 320 - for example for ease of scanning wider or narrower objects, for which a different carriage support length 320 may be more appropriate.

In the embodiment being described, each module 322 of the chain 320 is identical to every other module 322 in that chain 320. In alternative embodiments, modules 322a,b of different shapes and/or sizes may be present within a single carriage support 320 - for example to accommodate varying curvature, e.g. of a surface with both a concave portion and a convex portion.

In the embodiment being described, each module 322 is at least substantially U-shaped - the U-shaped modules 322 are aligned to form a channel with a U-shaped cross-section. The base of each U-shaped module 322 forms a portion of a base of the channel, the base forming part of the region of the module 322 furthest from the surface of the object 23a to be scanned in the embodiment being described. The "legs" of each U-shaped module 322 each form a portion of one side of the channel, the legs extending from the base towards the surface of the object 23a to be scanned.

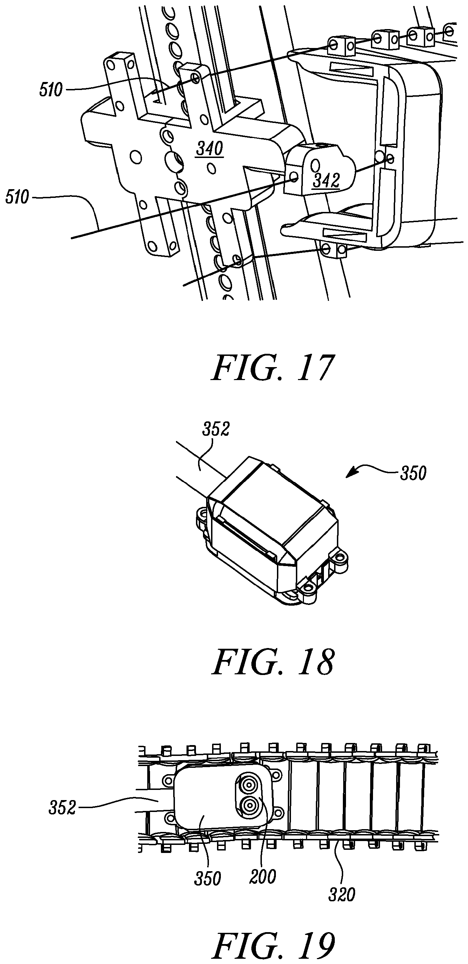

The channel is arranged to act as a guide channel for the carriage 350; the carriage 350 is constrained to move within the channel as illustrated in Figure 19. The carriage 350 is arranged to move between the legs of the U-shaped modules. In alternative embodiments, the modules 322 may have different shapes, for example providing one or more guide rails or guide lines for the carriage 350 rather than a guide channel, or forming a narrower guide channel arranged to receive a portion of, or protrusion from, the carriage 350 only, as opposed to enclosing the carriage 350.

In some such embodiments in which the modules are differently shaped, instead of creating a guide channel for the carriage 350, a guiding line for the carriage 350 may be provided. The carriage 350 may be moved along the line by hand in some embodiments. In such embodiments, the carriage 350 may comprise a loop, aperture or clip to allow the carriage to be connected to the guiding line - for example, the modules 322 may be rectangular in cross-section and the carriage 350 may comprise a rectangular channel arranged to fit around a module and to be slid along a chain of modules.

The proportions of the guide channel, and/or of each module 322 making up the guide channel, may be tailored for a particular application. As described elsewhere herein, the channel length may be adjusted as necessary to cover the width of the blade or other object 23a at the point of inspection/scanning (e.g. in wider areas of the blade 23a, more modular elements 322 can be added to make the channel longer). The channel length is around 1.2 m in the embodiment being described, and may be, for example, between 10 cm and 3 m, and optionally between 40 cm and 120 cm, in various embodiments.

A minimum value for the channel width (distance between legs 327 of the modules 322) and for the height (distance from tips of legs to base) may be dictated by the dimensions of the carriage 350, of which the minimum dimensions may be dictated by the probe 200 (or other tool). In the embodiment being described, the width and height of the probe are each approximately 40 mm, so the carriage 350 and channel are sized accordingly. The channel height and width are each around 45 mm in the embodiment being described. The channel may be smaller when a smaller probe is used. In alternative embodiments, one or both of the height and width may be in the range from 10 mm to 80 mm, preferably in the range from 15 mm to 42 mm, and optionally the channel may have a cross-section of 20 mm x 20 mm in some embodiments. The skilled person would appreciate that a channel with a smaller cross-section may more easily fit between fan blades 23a *in situ,* and may therefore be preferred.

In the embodiment being described, the probe 200 is removable from the carriage 350 and from the channel. In some alternative embodiments, the probe 200 may be permanently linked to the channel formed from the modules 322, and may not be removable from the channel without breaking a part of the apparatus. The carriage 350 may be integral with the probe 200 in such embodiments. The modules 322 may be permanently linked together in such embodiments. In such embodiments, the permanent link between the probe 200 and the modules 322 may provide a permanent electrical connection between the two (e.g. by means of a sliding contact), so potentially reducing the number of free cables.

In the embodiment being described, the carriage 350 provides a casing for the probe 200, the casing being flexible on the sides and on the top to facilitate the carriage 350 being in contact with the walls and base of the channel, and therefore securely and accurately located within the channel such that the carriage 350 can move along the channel, but not side-to-side within it.

In the embodiment being described, each module 322 has two "feet" 327, one at the bottom of each leg. Each foot 327 is arranged to make contact with the blade 23a in use, and therefore may be referred to as a contact surface of the module 322. In the embodiment being described, the contact surfaces 327 are smooth and curved, and in particular provide an at least approximately semi-circular lower edge to each "leg" of the module 322. The curvature may reduce or eliminate the risk of the contact between the modules 322 and the blade 23a damaging the blade, and may optionally facilitate some relative movement of the modules 322. Each module 322 may therefore provide two contact points with the blade 23a, and in particular one contact point with the blade on either side of the channel for the carriage 350. The contact surfaces 327 may be made of, and/or coated with, a relatively soft material to cushion any impacts on the blade 23a.

In alternative embodiments, each module 322 may have only one contact surface. The skilled person would appreciate that having more contact points with the blade 23a may facilitate more deterministic positioning of the carriage support 320, and therefore of the carriage 350, which may improve reliability and repeatability of measurements.

In the embodiment being described, each module 322 comprises an aperture 324. The aperture 324 passes through a central portion of the base of the U-shaped module 322 in the embodiment being described, and may therefore be described as a central aperture 324. The central apertures 324 of each module 322 are arranged to align with each other. A flexible rod 500 passes through each central aperture, and is connected to the fixation part 332, 342 of each mount, so securing the chain 320 of modules 322 to the object 23a. The modules 322 may be described as being threaded onto the rod 500. The flexible rod 500 may therefore retain the modules 322 in a line, whilst allowing some relative movement of the modules 322 along or around that line, and may be thought of as providing an axis or spine for the chain. In alternative embodiments, an aperture 324 for the flexible rod may be provided through a protrusion from the module 322 rather than through the base of the U-shaped module. The central aperture 324 extends through the entire width of each module 322, from its front face to its rear face.

The flexible rod 500 may be made of glass fibre or the likes. In alternative embodiments, the rod 500 may be replaced with a cable 500 - the component may therefore more generally be referred to as a flexible elongate member 500. The term "rod" is used herein for brevity and clarity, but the skilled person would appreciate that this need not be limiting. The skilled person would appreciate that the flexibility of the rod/elongate member 500 depends on the material selected for its construction. For example, a rod 500 of spring wire or super-elastic material with a length of 1.2 m (approximately equal to the channel length in the embodiment being described) may be able to be bent so far as to bring the ends of the rod 500 parallel to one another with no plastic deformation. In the case of a rod 500 of fibreglass, the maximum possible curvature would be considerably less. A material with suitable flexibility may therefore be selected for the rod based on the expected curvatures of surfaces to be scanned.

In embodiments in which a cable 500 is used in place of a rod, the apparatus may only work on the suction side of the fan blade 23a due to the differences in curvature. More specifically, the cable 500 may need to be held in tension to force the modules 322 into contact with the surface of the blade 23a. However, on the pressure side, the cable 500 would be likely to need to be in compression rather than in tension to force the modules 322 into contact with the surface of the blade 23a, and may therefore fold.

In the embodiment being described, each module 322 comprises two outwardly-directed protrusions 326a, 326b, one on each side of the module 322 (one on each leg of the U-shape in the embodiment being described). Each protrusion 326 comprises an aperture therethrough, the aperture extending through the entire width of each protrusion 326, from its front face to its rear face. The protrusions 326 are narrower than the module 322 in the embodiment being described.

The left-side protrusion 326a of each module 322 is arranged to align with the left-side protrusion 326a of its adjacent module. Similarly, the right-side protrusion 326b of each module 322 is arranged to align with the right-side protrusion 326b of its adjacent module. A first side cable 510a is arranged to extend through the left-side protrusions 326a of each module 322. A second side cable 510b is arranged to extend through the right-side protrusions 326b of each module 322. The cables 510 may improve or facilitate positioning and maintaining integrity of the chain 320, for example by limiting relative rotation of the modules 322 around the flexible rod 500. The cables 510 may be tensioned. In alternative embodiments, a pair of apertures for the cables 510 may be provided through side walls of the module 322 rather than through protrusions therefrom. In this context, "left" and "right" are used to indicate the sides of the modules 322 arranged to extend perpendicularly to the blade surface and to form side walls of the guide channel / of the carriage guide 320.

Each cable 510 is connected to each mount 330, 340, so extending between the mounts; in the embodiment being described, each connection is made using a respective aperture 334, 344 through the mount 330, 340, through which the cable 510 passes.

In the embodiment being described, steel and/or copper wires are used as the cables 510. The skilled person would appreciate that any material with a suitable strength and flexibility may be used in other embodiments; the cable can be as flexible as desired provided that it remains strong enough not to snap when tensioned to the maximum extent intended in use. The tensioning force on the chain of modules 322 may be set by eye by an operator checking that all of the legs of the modules 322 are in contact with the surface of the blade 23a. If some of the legs are not in contact, the tension may be increased until contact is made. The skilled person would appreciate that a suitable tension could be estimated by modelling the curvature of the surface and calculating how much force would be needed to ensure that all modules 322 are in contact with the surface.

In alternative embodiments, no cables 510 may be present; in some such embodiments, the cables may be replaced by biasing members (e.g. springs, elastic bands or the likes) between adjacent modules 322. In alternative embodiments, the cables 510 may be replaced with flexible rods 510 - the components may therefore more generally be referred to as flexible elongate members 510. The term "cables", or "side cables" is used herein for brevity and clarity, but the skilled person would appreciate that this need not be limiting.

In the embodiment being described, each module 322 comprises a protrusion 328 on a first side thereof (e.g. a front side) and a recess 329 on a second side thereof (e.g. a rear face), opposing the first side. In this context, "front" and "rear" are used to indicate the sides of the modules 322 arranged to contact other modules (modules being arranged "one in front of the other"). "Front" and "rear" may therefore be interchangeable. The protrusion 328 of one module 322 is arranged to be received in the recess 329 of an adjacent module. In the embodiments being described, the protrusions 328 and recesses 329 are curved so as to allow some relative rotation of the modules 322 without disengaging the protrusion-recess pairs. In the embodiments being described, the length of the flexible rod 500 and/or the design of the fixation parts 332, 342 is selected such that the protrusion-recess pairs cannot disengage whilst the rod 500 is mounted on the mounts 330, 340.

In the embodiment being described, the flexible rod 500 is pivotally mounted on the first mount 330 by means of a pivot arm 332. The pivot arm 332 is arranged to rotate around a single axis, locally parallel to the edge 29 of the blade 23a on which the first mount 330 is mounted. The cables 510 are arranged to be fixedly connected to the pivot arm 332 in the embodiment being described. The pivoting of the arm 332 may facilitate placement of the spine by allowing the cable 510 to follow the curvature of the blade 23a more closely in the region adjacent the pivot arm 322. In the embodiment being described, the flexible rod 500 is rotatably mounted on the second mount 340 by means of a pivotal connection 342. The pivotal connection 342 is arranged to rotate around a single axis, locally perpendicular to the surface of the blade 23a on which the second mount 340 is mounted. The connections to each mount may be identical in some embodiments.

In the embodiment being described, the pivotal connection 342 additionally serves as the tensioning element for the cables 510 - the cables 510 are arranged to be adjustably connected to the pivotal connection 342; for example by means of the cables 510 being arranged to be pulled relative to the pivotal connection 342 and locked in position, for example being fixed in place by a grub screw. The pivoting may again facilitate placement of the spine by allowing the cable 510 to follow the curvature of the blade 23a more closely in the region adjacent the pivotal connection 342.

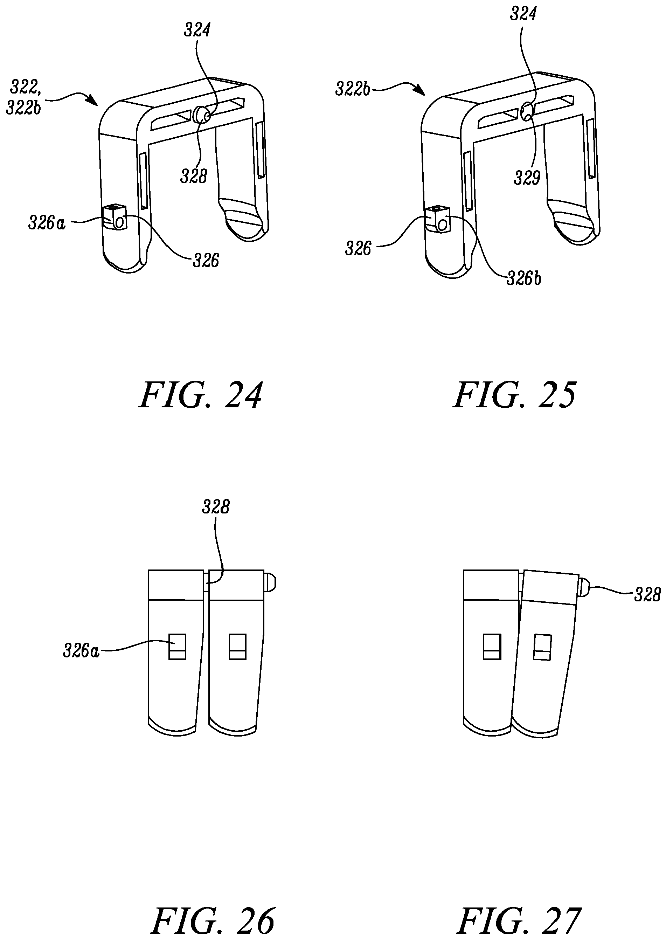

Two different module designs are shown in Figures 20 to 27. In the embodiment shown in Figures 20 to 23, the protrusion 328 and recess 329 of each module 322 are provided below the aperture 324 through which the flexible rod 500 passes. In the embodiment shown in Figures 24 to 27, the protrusion 328 and recess 329 of each module 322 are provided by the aperture 324 through which the flexible rod 500 passes. In particular, the aperture 324 passes through a protrusion 328 extending from a first side of each module 322, and the aperture widens towards a second side of each module 322, providing a curved opening 329 arranged to receive the protrusion 328 on the second side. The corresponding protrusions/recesses of either example embodiment may facilitate alignment of the modules of the channel. The skilled person would appreciate that any suitable set of corresponding features may be used instead or as well as the examples shown to help in aligning the modules 322.

The protrusion 328 and recess 329 in each case may be spherical or part-spherical in shape, e.g. hemispherical, to facilitate relative rotation, and/or may comprise spherical or part-spherical contact surfaces. In the embodiment shown in Figures 24 to 27, the protrusion 328 comprises a cylindrical portion with a hemispherical cap. The cylindrical portion provides a spacing between the bases of the modules 322b when assembled, as shown in Figures 26 and 27; the spacing may facilitate relative rotation of the modules as can be seen comparing Figures 26 and 27. The skilled person would appreciate that ball and socket joints or the likes could be used in some embodiments; hemispheres 328 and hemispherical shells 329 may facilitate adding and removing modules 322 as compared to extracting a ball from a socket. The skilled person would appreciate that a simple and compact rotatable connection which can be disconnected and reconnected without difficulty or damage may be preferred, but that many different types of joint could be used in various embodiments.

The surfaces of the base part of the module 322 facing other modules are straight and parallel in this embodiment - the additional spacing provided by the cylindrical portion of the protrusion 328 facilitates relative rotation of the modules. By contrast, in the embodiment shown in Figures 20 to 23, a portion of the front surface of the base portion of each module 322 is sloped as compared to the rear surface, allowing space for relative rotation of the "feet" of the modules away from each other as shown in Figures 22 and 23.

In the embodiment shown in Figures 20 to 23, apertures through the "legs", or side-walls 327, of each module 322 are shown, passing through the side walls 327 parallel to the intended rod direction. No such apertures are shown in the embodiment of Figures 24 to 27. These apertures may simply serve to reduce the amount of material used, and/or to reduce the print time for a module made by additive manufacture. They may not serve any functional purpose in use, and may be present or omitted as desired. Apertures through the base of each module shown in Figures 20 to 27 may serve the same manufacturing purposes, and may be present or omitted as desired.

In addition, the edges of each module 322 are curved or chamfered to facilitate smooth relative movement. When the chain 320 is mounted in position on an object 23a to be inspected, the shape of the modular parts 322 allows the channel formed therefrom to adapt to the curvature, whilst limiting their mobility to maintain a channel of suitable dimensions for the carriage 350 to pass through.

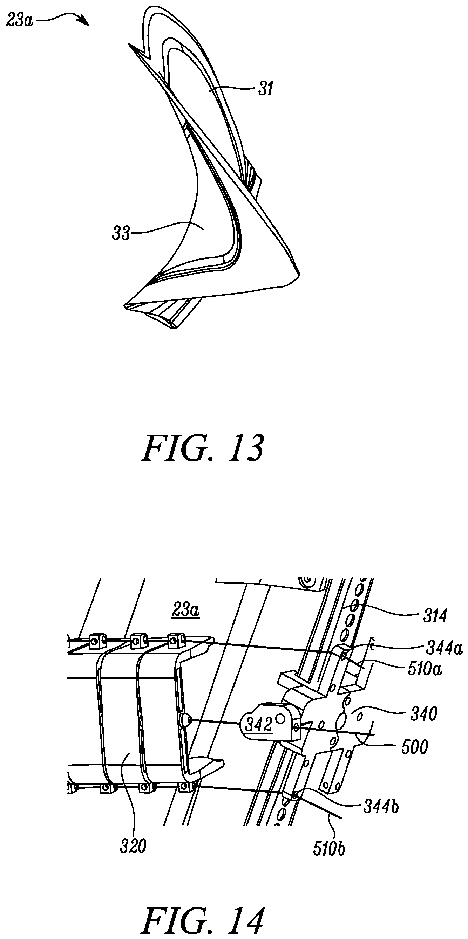

As shown in Figure 13, each blade 23a has a convex surface and a concave surface. In the embodiments being described, different module shapes 322 are used for the convex surface as compared to the concave surface, to facilitate maintaining probe contact. Two different versions of the chain 320 are therefore provided.

Figures 20 to 23 illustrate modules 322a designed for use on a concave surface. Figures 11, 16 and 17 illustrate a chain 320 of these modules 322a mounted on a concave surface of a blade 23a. As shown in Figures 22 and 23, the "legs" of the U-shaped modules 322a have a constant width, but an upper portion (in the orientation shown in these figures) of the front surface of the base of each module 322a is sloped rearwardly, so allowing each pair of adjacent modules 322a to tilt apart as shown in Figure 23. The tips of the legs of each U-shaped module 322a may therefore cover a strip of blade surface longer than the length of the flexible rod 500. The tips move apart whilst the bases move together.

In alternative embodiments, the modules 322a could be symmetrical, with both sides of the upper portion sloped to allow adjacent pairs to tilt apart. In the embodiment being described, the use of asymmetric sloped and vertical surfaces, with one straight/non-sloped side, was found to facilitate maintaining contact between these upper portions of adjacent modules 322a in use. This design may allow that the modules 322a to be 'locked' at specific angles (see Figure 23) in such a way as to better follow the curvature of the surface. The angle of the sloped side of the upper portion may be selected depending on the curvature of the object 23a.

On the concave surface, the side cables 510 may prevent the chain 320 from rotating; the chain 320 may be pushed against the surface by the central flexible rod 500.

Figures 24 to 27 illustrate modules 322b designed for use on a convex surface. Figures 12, 14 and 15 illustrate a chain 320 of these modules 322b mounted on a convex surface of the blade 23a. As shown in Figures 26 and 27, the bases of the U-shaped modules 322b have a constant width, but a lower portion (in the orientation shown in these figures) of the front surface of the legs of each module 322b is sloped rearwardly, so allowing each pair of adjacent modules 322a to tilt together as shown in Figure 27. The tips move together whilst the bases move apart. In alternative embodiments, the modules 322b could be symmetrical, with both sides of the legs sloped to allow adjacent pairs to tilt apart. In the embodiment being described, the use of asymmetric sloped and vertical surfaces, with one straight/non-sloped side, was found to facilitate maintaining contact between the legs of adjacent modules 322b in use. This design may allow the modules 322b to be 'locked' at specific angles (see Figure 27) in such a way as to better follow the curvature of the surface. The angle of the sloped side of the legs may be selected depending on the curvature of the object 23a.

On the convex surface, the side cables 510 may allow or facilitate tensioning of the chain 320 in position, in addition to the tensioning provided by the central flexible rod 500.

The front and rear surfaces of each module 322 may therefore be (at least in part) non-parallel, e.g. having a first surface region (e.g. a region of the front surface) perpendicular to the object width and a second surface region (e.g. a region of the rear surface) at an acute or obtuse angle to the object width. Contact between the first surface region of one module and the second surface region of the adjacent module may define a maximum relative angle of rotation for the modules such that the feet move away from each other (Figures 22 and 23 - modules 322a for use on a concave surface) or towards each other (Figures 26 and 27 - modules 322b for use on a convex surface).

In the embodiment being described, the carriage 350 is mounted on the carriage support 320. In the embodiment being described, the carriage 350 is slidably mounted on the carriage support 320, and more particularly within the channel formed by the modules 322 of the carriage support 320, such that it can move with respect to the carriage support 320 only when a force is applied thereto (no unintentional sliding). In the embodiment being described the carriage 350 is shaped and sized for frictional engagement with the carriage support 320 such that it can be made to slide along the channel 320 but will not slip without an applied force, and cannot move perpendicular to the channel 320. In some embodiments, an indexing arrangement such as that described for the rails 312, 314 and sliders 330, 340 may, additionally or alternatively, be provided for the carriage support 320 and carriage 350. For example, holes or protrusions for use for indexed movement may be provided along an arm 352 of the carriage 350.

The arm 352 may be or comprise a strip of flexible metal (e.g. thin titanium) attached to the carriage 350. The arm 352 may have an aperture therethrough at a known position, and the modules 322 of the channel may also have apertures therethrough - in such embodiments, a peg could be used to index the position of the carriage 350 along the chain of modules 322 when desired. Equivalently, the arm 352 or each module 322 may have a retractable pin arranged to be received in an aperture on the modules 322 or arm 352, respectively, for indexed movement of the arm 352 along the modules 322. The use of a strip of material as the arm 352 may facilitate pushing or pulling the carriage 350 along the chain of modules 322. In alternative embodiments, one or more cables 352 may be used as the arm 352; if cables are used, all movement of the carriage 350 may be by pulling, not pushing, as the cables may bend or fold in compression.

In embodiments with or without rails 312, 314, the scanning fixture 300 is arranged to move the probe 200, or other tool, over the surface of the object 23a, and more specifically across (at least a portion of) the width of the object 23a, by moving the carriage 350 with respect to the carriage support 320.

In embodiments with rails 312, 314, movement of the carriage support 320 along the length of the rails 312, 314 is additionally arranged to move the carriage 350, and therefore to move any tool 200 mounted on the carriage 350. In the embodiment being described, the scanning fixture 300 is arranged to move the tool 200 over the surface of the object 23a, and more specifically along the length of the object 23a, by moving the carriage support 320 with respect to the rails 312, 314. The carriage support 320 is arranged to flex to adapt to changing curvature as the carriage support 320 is moved along the length of the object 23a.

In the embodiment being described, the carriage 350 is moved manually; in particular, the sliders 330, 340 are manually moved along the rails 312, 314 and the carriage 350 is manually moved along the carriage support 320. In alternative or additional embodiments, some or all of the movement of the carriage 350 may be automated. In such embodiments, the scanning fixture 300 may comprise one or more actuators arranged to move the sliders 330, 340 along the rails 312, 314 and/or to move the carriage 350 along the arm 320.

In the embodiment being described, the modules 322 are arranged to move in response to the movement of the sliders 330, 340, adapting to changing curvature of the blade 23a. The skilled person would appreciate that blade width generally varies between the hub and the tip - depending on position along the blade 23a, modules 322 can be added to, or removed from, the chain 320 to adapt the chain 320 to the changing blade width. To compensate for small variations in width, and to allow for the clearance space between the slider 330, 340 (or other mount) and the end module 322 of the chain 320, a spring is provided around each end of the rod 500; the spring is arranged to push the modules 322 away from the nearest mount 330, 340, maintaining contact between the modules and avoiding sliding of the modules 322 across the surface of the object 23a. Each spring is sized not to pass through the central aperture 324 of the module 322 in the embodiment being described. In other embodiments, a separate stopper or connector or the likes may be provided to keep the spring in position, or no spring may be provided.

The arm 352 of the carriage 350 of the embodiment being described has indexing holes (not shown) to allow indexed movement of the carriage 350 relative to the carriage support 320. In alternative embodiments, no indexing holed may be provided, and/or continuous movement (rather than discrete, indexed, movement) may be facilitated. In the embodiment being described, the carriage 350 is arranged to be moved manually by an operator. In alternative embodiments, the apparatus 100 may additionally comprise one or more actuators, and may for example comprise one or more motors and/or control circuitry arranged to implement movement of the carriage 350 relative to the carriage support 320 - the inspection process may therefore be automated in such embodiments. In embodiments with rails 312, 314, an indexing means and optional actuator may also be provided for slider movement, so as to move the carriage support 320 relative to the object 23a.

In the embodiment being described, the scanning fixture 300 comprises a plurality of encoders 400 arranged to register position data for the carriage 350, and therefore for the probe 200. In particular, the scanning fixture 300 comprises one encoder 400 arranged to detect position of the slider 330 along the rail 312, and one encoder arranged to detect the position of the carriage 350 along the carriage support 320. In other embodiments, a single encoder 400 may perform both functions.

In embodiments without rails 312, 314, a single encoder 400 may be provided, the encoder 400 being arranged to register position of the carriage 350 along the carriage support 320. In such embodiments, no encoder may be provided on the mount 330b, 340b, but rather only on the probe (or other tool) 200 or carriage 350.

In embodiments with rails, a position of the sliders 330, 340 along the length of the rails 312, 314 may provide an x-coordinate for the position data. In the embodiment being described, an encoder 400 is provided on the first slider 330, the encoder 400 being arranged to capture position data for the first slider 330, and therefore for the carriage support 320. The second slider 340 is arranged to be moved parallel to the first slider. A mounting point 450 is provided on the first slider 330 to facilitate the mounting of the encoder 400 thereon in the embodiment being described. In alternative or additional embodiments, an encoder 400 may be provided on each slider. A position of the carriage 350 along the carriage support 320 may provide a y-coordinate for the position data.

In use, the carriage 350 may be held in a fixed place (a fixed y-coordinate) on the carriage support 320 during movement of the sliders 330, 340 along the length of the rails 312, 314, and then the y-coordinate changed for a subsequent movement along the x-direction, or the carriage 350 may be moved across the width of the blade 23a at each x-coordinate before proceeding to the next x-coordinate, for example. Alternatively or additionally, a different path or algorithm may be followed. Due to the shape of the blade 23a, the skilled person would appreciate that not all y-coordinates may be available for all x-coordinates (and *vice versa*), and that a control algorithm or manual user may adapt movement accordingly.

In the embodiments being described, the one or more encoders 400 are arranged to send the generated position data to a separate processing unit 150. Similarly, the probe 200 is arranged to send the object inspection data it generates to the processing unit 150.

In the embodiment being described, the position data is matched to the object inspection data using time stamps associated with each data set, and/or by time of receipt of the data by the processing unit 150. In alternative or additional embodiments, other matching methods may be used - for example, for a known number of data points taken at pre-set locations, an order of a data point in a sequence may be sufficient to match the object inspection data to a position at which that data point was recorded. The position data may therefore be combined with the object inspection data to provide spatial object inspection data. The spatial object inspection data may be presented, for example, as a coloured image or a map of the object inspected (in the embodiment being described, a fan blade 23a). The spatial object inspection data may be used to identify and locate any damage, defect, or weakness in the object being inspected.

In the embodiment being described, the scanning fixture 300 is sized and shaped to be insertable between fan blades 23a mounted in a fan 23 of a gas turbine engine 10 such that the inspection apparatus 100 can be used *in situ,* as is shown in Figure 4. In the embodiment being described, the rails 312, 314 and the carriage support 320 are separable, which may facilitate assembly on a blade 23a *in situ.*

Figure 6 illustrates a method 1200 of an embodiment, in which an inspection apparatus 100 is assembled to inspect an object 23a. The object 23a is a fan blade in the embodiment being described, but may be a different object in other embodiments. The fan blade 23a is inspected *in situ* within a fan 23 of a gas turbine engine 10 in the embodiment being described, but a standalone object may be inspected in other embodiments.

Prior to assembling the inspection apparatus 100, the engine 10 may be prepared so as to allow access to the blade 23a. The preparation may include, for example, one or more of:
- Ensuring that the engine is switched off and safe to approach;
- Removal of annular fillers to get access to the area close to the root of the blade;
- Removal of the engine's cone, where present; and/or
- Removal of the engine from the pylon of the wing.

At step 1201, the sliders 330, 340 are each attached to their respective rail 312, 314. In such embodiments, a clip, stopper or the likes may be added to prevent the sliders 330, 340 from accidentally becoming detached, and/or a force may need to be exerted on the sliders 330, 340 for attachment, e.g. to bend them open. In alternative embodiments, the subsequent act of mounting the rails 312, 314 onto the object 23a may prevent accidental detachment, e.g. by blocking access to one or both ends of the rails 312, 314.

At step 1202, the first and second rails 312, 314 are mounted on the object 23a to be inspected. In the embodiment being described, the first rail 312 is mounted along a first edge 29 of the object 23a. In the embodiment being described, the first rail 312 is mounted along the first edge 29 of the object 23a at a plurality of mounting positions - in particular, using a plurality of clamps 316 spaced along the first edge 29. In the embodiment being described, the second rail 314 is mounted along a second edge 25 of the object 23a. In the embodiment being described, the second rail 314 is mounted along the second edge 25 of the object 23a at a plurality of mounting positions - in particular, using a plurality of clamps 316 spaced along the second edge 25. The rails 312, 314 may be attached in either order, or simultaneously.

In the embodiment being described, both rails 312, 314 are arranged to be fixedly mounted on the object 23a in use; i.e. the rails 312, 314 are arranged not to move relative to the object 23a whilst attached thereto. The rails 312, 314 therefore do not move relative to the object 23a whilst measurements are being taken - the skilled person will appreciate that the fixed mounting of the rails 312, 314 may allow or facilitate the mapping of a position as determined by the encoders to a position on the object 23a when the data gathered are processed. In the embodiment being described, both rails are curved 312, 314. The shape of each rail 312, 314 is selected to match the curvature of the respective edge 25, 29 along which the rail 312, 314 is to be mounted.

In alternative embodiments, one or both of the sliders 330, 340 may instead be mounted 1201 on the rails 312, 314 after the rails have been mounted 1202 on the blade 23a. Steps 1201 and 1202 may therefore be performed in any order.

At step 1203, the sliders 330, 340 are moved to the intended starting position for the scan; e.g. to one extreme or the other of the rails' length, or to a position along the blade length of particular interest.

At step 1204, a selection is made as to which surface of the blade 23a is to be scanned (first). The selection may be pre-set; step 1204 may therefore be performed at any point prior to step 1205. In some embodiments, it may be decided to scan both surfaces at once. In some embodiments, step 1204 may need to be performed before the sliders (or other mounts) 330, 340 are mounted on the object 23a, as the chain 320 may only be attachable to the mounts on one side.

At step 1205, the chain 320 is prepared, for use as the carriage support 320. In the embodiment being described, the modules 322 are mounted on the flexible rod 500 and the side cables 510 are passed through the protrusions 328 on the modules 322 prior to mounting the rod 500 and side cables 510 on the slider 330 for ease of access. In alternative embodiments, the modules 322 may be slid onto the rod and the cables 510 threaded through the protrusions *in situ* (i.e. after step 1206). In alternative embodiments, no side cable 510 may be present, no rod 500 may be present, and/or the rod 500 may be replaced with a central cable. Modules 322 may be selected, added or removed to match the length of the chain 320 to the width of the blade 23a at the intended scan starting position.

At step 1206, attachment of the carriage support 320 to become part of the frame 310 begins. In the embodiment being described, the carriage support 320 is first attached to the rearmost slider 330 (the slider 330 mounted on the trailing edge 29 of the blade 23a). The skilled person would appreciate that, when working from the front of the fan 23, access to the trailing edge 29 may be (partially) blocked were the carriage support 320 mounted on the foremost slider 340 first. In other scenarios, the carriage support 320 may be mounted on the other slider first.

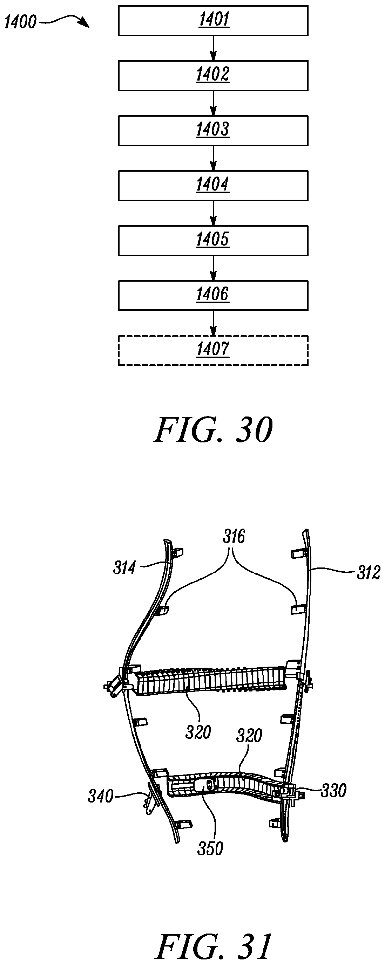

In the embodiment being described, attaching 1206 the carriage support 320 to the slider 330 comprises attaching the flexible rod 500 and side cables 510a, 510b to the slider 330. If both surfaces are to be scanned at once, two carriage supports 320 may be attached to the slider 330; one on the concave side of the blade 23a and the other on the convex side of the blade 23a, as shown in Figure 31.

At step 1207, the probe 200 and encoder(s) 400 are installed. In particular, the probe 200 is mounted within the carriage 350, and the carriage 350 inserted into the channel formed by the modules 322. A pulling cable 352 (or other arm 352) is attached to the carriage 350 and laid within the channel, to allow the carriage 350 to be pulled (or pushed) along the channel, e.g. from back to front.

An encoder 400 is mounted on the slider 330 (in other embodiments, the slider 330 may be provided with the encoder 400 already attached thereto at step 1201). The encoder 400 is arranged to monitor position of the slider 330 along the rail 312. In some alternative embodiments, a single encoder may monitor both position of the slider 330 along the rail 312 and position of the carriage 350 along the chain 320.

At step 1208, the forward/loose end of the chain 320 is attached to the foremost slider 340; i.e. the slider mounted on the leading edge 25 of the fan blade 23a.

In the embodiment being described, the side cables 510a,b and/or the flexible rod 500 may then be tensioned (or compressed) as appropriate to maintain alignment of the modules 322, and/or to bias the modules 322 towards the surface, as is described in more detail below.

Installation of the apparatus 100 on the blade 23a is then complete, and inspection may commence. Inspection may comprise moving 1310 the carriage 350 over the surface of the object 23a, and generating, by the probe 200, object inspection data for a plurality of positions of the probe 200 as the probe 200 is moved over the surface of the object 23a.

Position data may be generated by the encoder(s) 400 as the carriage 350 moves. The position data generated by the encoders and the object inspection data generated by the probe may then be used to generate spatial object inspection data.

For embodiments in which fixed mounts 330b, 340b are used instead of sliders 330, 340, all steps of the method 1200 may be the same except that there are no separate rails and sliders, but rather fixed mounts; steps 1201 to 1203 may therefore be replaced by attaching two fixed mounts to the blade 23a at the intended starting position for the scan. Step 1203 (selection of a position along the blade length for the first scan) is performed prior to/when attaching the fixed mounts 330b, 340b in such embodiments, as their position on the blade 23a determines the first scan location.

For a vertically-aligned blade 23a, for example, scanning may be carried out in a horizontal pattern - pulling the carriage 350 horizontally across the blade 23a at a first vertical position and then moving the sliders 330, 340 vertically and repeating the operation at a different vertical position. This process may be continued until the entire surface of the blade 23a has been scanned. For embodiments in which fixed mounts are used instead of sliders 330, 340, the mounts may instead be detached and reattached in a different vertical position between horizontal scans. In either case, one or more modules 322 may be added, removed or exchanged between vertical positions to account for differing blade width and/or curvature.

Figure 29 illustrates a method 1300 of scanning an object 23a, such as the blade 23a, using the apparatus 100 installed as described with respect to Figure 6.

At step 1302, the apparatus 100 is tensioned to lock the carriage support 320, and hence the guide channel, in place, so defining a fixed route for the carriage 350. In the embodiment being described, the approach to tensioning varies between convex and concave surfaces, as described below.

Taking convex surfaces first:
- At sub-step 1304a, the side cables 510a, b are pulled/tightened until all modules 322 are aligned.
- At sub-step 1306a, a first side cable 510a of the two side cables 510 is pulled and locked in position on the forward slider 340. The first side cable 510a may be the lower (or upper) side cable 510a when the blade 23a is arranged vertically as shown in Figure 4.
- At sub-step 1308a, a second side cable 510b of the two side cables 510 is pulled and locked in position on the forward slider 340. The second side cable 510b may be the upper (or lower) side cable 510b when the blade 23a is arranged vertically as shown in Figure 4.

For a concave surface, the sub-steps are as follows:
- At sub-step 1304b, the flexible rod 500 passing through the modules 322 is pushed towards the surface until all the modules are in contact with the blade 23a.
- At sub-step 1306b, chain position may be adjusted using the side cables 510 if needed (e.g. if the modules 322 are not well aligned).
- At sub-step 1308b, a screw in each fixation part 332, 342 is tightened to hold the rod 500 in position.
- By the end of step 1302, a secure inspection path (e.g. a guide channel) has been formed across the width of the blade 23a.

The method then proceeds to step 1310 for both surface types. At step 1310, the carriage 350 is pulled across the width of the blade 23a, along the inspection path (e.g. through the guide channel) formed by the carriage support 320.

In the embodiment being described, the arm or pulling cable 352 of the carriage 350 is used to manually move the carriage 350. In alternative or additional embodiments, the movement may be automated. In the embodiment being described, the scanning fixture 300 is therefore used to move 1310 the carriage 350, and therefore the probe 200, over the surface of the object 23a, along a set path.

In the embodiment being described, the probe 200 is mounted in the carriage 350, such that position data for the carriage 350 is also position data for the probe 200. In the embodiment being described, the probe 200 generates object inspection data as it is moved over the surface of the object 23a. Object inspection data are generated for a plurality of positions of the probe 200. In various embodiments, the carriage 350 may move between data point locations and stop moving at each data point location whilst the probe 200 takes a reading, or the probe 200 may take readings whilst in motion.

In the embodiment being described, the position data concerning the position of the carriage 350 are generated (by the one or more encoders 400) and either saved locally or transmitted elsewhere as the carriage 350 is moved.

The position data generated by the encoder(s) 400 and the object inspection data generated by the probe 200 are combined to generate spatial object inspection data. In the embodiment being described, the processing and combination of data are performed by a processing unit 150 separate from, but in communication with, the inspection apparatus 100. In alternative embodiments, the processing and combination of data may be performed by a part of the inspection apparatus 100.

At step 1312, the cables 510 are unlocked and/or the rod 500 is released.

At step 1314, the sliders 330, 340 are moved to a different vertical position, e.g. the next vertical index, for a subsequent scan to be performed. One or more modules 322 may be added or removed if the blade width is different. The method 1300 then returns to step 1302; the guide channel is adjusted for the new vertical position and then the new scan can be performed. In embodiments in which the width and curvature of the object 23a does not vary, step 1312 may not be performed before moving the sliders 330, 340.

In embodiments without sliders, step 1312 may additionally or alternatively comprise detaching the mounts from the blade 23a. The installation method 1200 may then be performed for the new location before returning to step 1302.

Figure 30 illustrates an inspection method 1400 for inspecting an object 23.

The inspection method 1400 comprises mounting 1401 first and second mounts 330, 330b, 340, 340b of a scanning fixture 300 on the object 23. The mounting 1401 may comprise any or all of the steps 1201, 1202, 1203, 1204 relating to mounting described above with respect to Figure 6.

The inspection method 1400 comprises preparing 1402 a carriage support 320 of the scanning fixture 300 by mounting a plurality of modules 322 on one or more flexible elongate members 500, 510. The preparation 1402 may be as described above.

The inspection method 1400 comprises attaching 1403 the carriage support 320 to the first and second mounts 330, 330b, 340, 340b such that the carriage support 320 extends between the mounts. The plurality of modules 322 together form an inspection path.

The inspection method 1400 comprises installing 1404 a carriage 350 comprising a probe 200 such that the carriage 350 can move along the inspection path. The carriage 350 may be installed on or in the carriage support prior to, or during, the step 1403 of attaching the carriage support 320 to the first and second mounts 330, 330b, 340, 340b in some embodiments.

Once the carriage 350 has been installed 1404, the method 1400 further comprises moving 1405 the carriage 350 over the surface of the object 23a. The moving 1405 of the carriage 350 may be performed as described above.

The inspection method 1400 comprises generating 1406, by the probe 200, object inspection data for a plurality of positions of the probe 200 as the probe 200 is moved over the surface of the object 23a. The generation step 1406 may therefore be performed during the moving step 1405, and/or between movements of the carriage 350. Data generated by the probe 200 may be combined 1407 with carriage 350 / probe 200 location data (generated by one or more encoders or the likes), as described above, to build up a map of the object 23a. The combination 1407 may be performed by a processor, or other processing circuitry or the likes, of the scanning fixture 300 or may be performed remotely. A processing unit 150, either as part of the scanning fixture 300 or in communication therewith, may be arranged to receive the object inspection data and the position data and to generate 1407 spatial object inspection data therefrom

In summary, an inspection or repair apparatus 100, 1000 arranged to allow non-destructive inspection, marking, repair, or the likes of an object 23a such as the blade 23a of a fan 23 of an aircraft gas turbine engine 10 to be performed *in situ* is disclosed herein, along with methods of using such an apparatus 100, 1000.

In some embodiments, the apparatus 100 includes two rails 312, 314, each rail shaped to follow an edge 25, 29 of the blade 23a (the leading edge or trailing edge). The rails 312, 314 are clamped to the blade edges 25, 29 with clamps 316, which are arranged to be relatively soft and/or padded to minimise or avoid damage to the surface of the blade 23a. The clamps 316 are designed to be easily attachable and detachable, for example by means of one or more tightening screws. Once the rails 312, 314 are attached to the blade 23a, two sliders 330, 340 can be moved along the rails 312, 314 and can be stopped at set positions (e.g. indexed positions). In alternative embodiments, one fixed mount on each edge is used in place of the rails 312, 314. The fixed mount may be or comprise a clamp 316 as described above.

Between the two sliders 330, 340 (or between the two fixed mounts 330b, 340b or other supports in inspection apparatuses 1000 of embodiments without rails and sliders), a flexible carriage support 320 comprising (optionally identical) modules provides a single path, regardless of the curvature of the blade 23a. For the installation of the carriage support 320, a rod 500 and/or one or more cables 510 is passed through all modules 322 and is attached to both sliders/mounts. The rod 500 and/or cables 510 is/are tensioned as appropriate for the curvature of the blade. The apparatus 100 as described herein may be easily applied to any shape of fan blade 23a, as the carriage support 320 is arranged to adapt to a wide variety of surface widths and curvatures. The carriage support 320 can flex to adjust to different curvatures, and can have one or more modules 322 added or removed to adjust to different widths. Once adapted to the curvature and width of the region to be scanned, the carriage support 320 may be locked in place; setting the carriage support 320 in a given position may allow the operator to move the probe, or other tool, 200 across the surface in a repeatable manner. In various embodiments, only the rails 312, 314 (where present) are intended to be shaped to match a particular blade curvature - the carriage support 320 adapts.

In embodiments with rails 312, 314, both position of the sliders 330, 340 along the rails 312, 314 and position of the tool 200 along the carriage support 320 are encoded and tracked during the inspection/other process. One encoder may be attached to the carriage 350, and optionally to the tool 200, and monitors the position relative to the carriage support 320 / across the width of the blade 23a. A second encoder 400 may be attached to one of the sliders 330 and monitors the position of the slider 330 (and therefore the location of the path) along the length of the blade 23a.

In embodiments without rails, a single encoder may be present, located on the carriage 350, and optionally on the tool 200.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A scanning fixture (300) for use in moving a tool (200) across a surface of an object (23a), the scanning fixture (300) being arranged to be attached to the object (23a) and comprising:
a carriage (350), wherein the carriage (350) is arranged to have the tool (200) connected thereto; and
a frame (310) arranged to be mounted on the object (23a) and to have the carriage (350) mounted thereon, the frame (310) comprising:
a first mount (330, 330b) arranged to be mounted on the object (23a);
a second mount (340, 340b) arranged to be mounted on the object (23a); and
a carriage support (320) arranged to extend between the first and second mounts (312, 314), across a surface of the object (23a), and to have the carriage (350) moveably connected thereto;
wherein the carriage support (320) is a modular carriage support (320), comprising a plurality of modules (322) rotatably mounted on an elongate member (500), each module (322) comprising a contact surface arranged to be in contact with the surface of the object (23a), the plurality of modules (322) together forming a path along which the carriage (350) can move.

2. The scanning fixture (300) of claim 1 wherein the object is a fan blade (23a) and the scanning fixture is arranged to be attached to the fan blade, and wherein optionally the scanning fixture is sized and shaped to be insertable between fan blades mounted in a fan (23) of a gas turbine engine (10) such that the scanning fixture can be used *in situ*

3. The scanning fixture (300) of claim 1 or claim 2, wherein the plurality of modules (322) are arranged to rotate relative to each other to conform to the surface of the object (23a) when the elongate member (500) is tensioned or compressed.

4. The scanning fixture (300) of any preceding claim wherein:
the first mount (312, 330) comprises a first rail (312) arranged to be fixedly mounted along a first edge (25) of the object (23a) and a first slider (330) arranged to be slidably mounted on the first rail (312) and to have a first end region of the carriage support (320) connected thereto; and
the second mount (314, 340) comprises a second rail (314) arranged to be fixedly mounted along a second edge (29) of the object (23a) and a second slider (340) arranged to be slidably mounted on the second rail (314) and to have a second end region of the carriage support (320) connected thereto,
and wherein the carriage support (320) is arranged to move with respect to the rails (312, 314), and therefore along a length of the object (23a).

5. The scanning fixture (300) of claim 4 wherein the object (23a) is curved and the first rail (312) is shaped to match the curvature of the first edge (25) and the second rail (314) is shaped to match the curvature of the second edge (29).

6. The scanning fixture (300) of claim 4 or claim 5, wherein the frame (310) further comprises an indexing arrangement (312a, 314a) arranged to allow indexed movement of the carriage (350) relative to the rails (312, 314).

7. The scanning fixture (300) of any of claims 1 to 3, wherein the first mount (330b) comprises a clamp arranged to be fixedly mounted at a position on a first edge (25) of the object (23a) and the second mount (340b) comprises a clamp arranged to be fixedly mounted at a position on a second edge (29) of the object (23a), and wherein the mounts (330b, 340b) are arranged to retain the carriage support (320) in a fixed position along the length of the object (23a).

8. The scanning fixture (300) of any preceding claim wherein each module (322) is U-shaped and is arranged to form a portion of a flexible guide channel for the carriage (350), the flexible guide channel providing the path.

9. The scanning fixture (300) of any preceding claim wherein each module (322) has an aperture (324) therethrough, and wherein the elongate member (500) is flexible and is arranged to pass through the aperture (324) of each module (322) and to be secured to both mounts (330, 330b, 340, 340b) so as to retain the modules (322) in a line between the mounts (330, 330b, 340, 340b), and wherein optionally the aperture (324) passes through a central region of each module (322).

10. The scanning fixture (300) of any preceding claim wherein each module (322) comprises:
a first side apertures (326a) in a first side region of the module (322); and
a second side apertures (326b) in a second side region of the module (322), the second side opposing the first side;
and wherein the carriage support (320) further comprises:
a first side cable (510a) arranged to pass through the first side aperture (326a) of each module (322) and to be secured to both mounts (330, 330b, 340, 340b); and
a second side cable (510b) arranged to pass through the second side aperture (326b) of each module (322) and to be secured to both mounts (330, 330b, 340, 340b).

11. The scanning fixture (300) of any preceding claim wherein each module (322) comprises a protrusion (328) on a front face thereof and a recess (329) on a rear face thereof, and wherein the protrusion (328) of one module (322) is arranged to be rotatably received within the recess (329) of an adjacent module (322) of the carriage support (320), and wherein optionally the protrusion (328) and the recess (329) comprise hemispherical contact surfaces.

12. An apparatus (100, 1000) for use in moving a tool across a surface of an object (23a), the apparatus (100, 1000) comprising:
a tool (200); and
a scanning fixture (300) according to any preceding claim, with the tool (200) mounted thereon.

13. The apparatus (100, 1000) of claim 12, wherein the scanning fixture (300) further comprises one or more encoders arranged to generate position data for the carriage (350), and the apparatus (100, 1000) further comprises a processing unit (150) arranged to receive the object inspection data and the position data and to generate spatial object inspection data therefrom.

14. An inspection method (1200, 1300, 1400) for inspecting an object (23), the inspection method (1200, 1300, 1400) comprising:
mounting (1401, 1201, 1202, 1203, 1204) first and second mounts (330, 330b, 340, 340b) of a scanning fixture (300) on the object (23);
preparing (1402, 1205) a carriage support (320) of the scanning fixture (300) by mounting a plurality of modules (322) on an elongate member (500) such that the modules can rotate with respect to the elongate member;
attaching (1403, 1206) the carriage support (320) to the first and second mounts (330, 330b, 340, 340b) such that the carriage support (320) extends between the mounts and each module (322) has a contact surface in contact with a surface of the object (23a), the plurality of modules (322) together forming an inspection path;
installing (1404, 1207) a carriage (350) comprising a probe (200) such that the carriage (350) can move along the inspection path; and
moving (1405, 1310) the carriage (350) over the surface of the object (23a); and
generating (1406), by the probe (200), object inspection data for a plurality of positions of the probe (200) as the probe (200) is moved over the surface of the object (23a).

15. The method (1200, 1400) of claim 14, wherein the inspection method (1200, 1300, 1400) further comprises tensioning or compressing the elongate member (500) so as to bring one or more of the modules (322) into contact with the surface of the object (23a).
